# EUROPÄISCHE PATENTSCHRIFT

(11) **EP 0 937 528 B1**
(45) Veröffentlichungstag und Bekanntmachung des Hinweises auf die Patenterteilung: **30.05.2001**
(21) Anmeldenummer: 99101837.5
(22) Anmeldetag: 28.01.1999
(51) Int. Cl.: B23D 77/02, B23P 15/46

(54) **Reibwerkzeug und Verfahren zu dessen Herstellung**
Reaming tool and its manufactoring method
Alésoir et sa méthode de production

(30) Priorität: 19.02.1998 DE 19806864
(43) Veröffentlichungstag der Anmeldung: 25.08.1999
(73) Patentinhaber: August Beck GmbH & Co., D-72474 Winterlingen (DE)
(72) Erfinder:
(74) Vertreter: Maser, Jochen, Dipl.-Ing.

(56) Entgegenhaltungen:
- EP-A- 0 713 747
- CH-A- 494 611
- DE-C- 3 406 035
- FR-A- 920 383
- US-A- 5 031 484
- US-A- 5 115 697
- US-A- 5 226 760

## Beschreibung

Die Erfindung betrifft Verfahren zur Herstellung von Reibwerkzeugen gemäß dem Oberbegriff der Ansprüche 1,2 und 3; Siehe US-A 5 115 691.

Reibwerkzeuge dienen zur Feinbearbeitung von Bohrungen und erfordern deshalb eine präzise Anordnung und Ausgestaltung von Zerspanungs- und Führungselementen. Insbesondere ist eine hohe Maßgenauigkeit erwünscht.

Es sind bereits Reibwerkzeuge bekannt geworden, bei denen die Zerspanungs- beziehungsweise Führungselemente in einen Grundkörper eingesetzt sind, zum Beispiel durch Löten oder Kleben. Zur Präzisierung der Aufnahme der eingesetzten Zerspanungs- und Führungselementen ist beispielsweise aus der DE 196 21 813 A1 bekannt geworden, eine entsprechende Aufnahme zur Positionierung von Führungsleisten auszubilden, damit diese exakt zum Grundkörper positionierbar sind. Durch diese Ausgestaltung wurde eine erhebliche Verbesserung erzielt. Die steigenden Qualitätsanforderungen erfordern jedoch eine weitere Verbesserung der Qualität von Reibwerkzeugen, beispielsweise in der Verbindung zwischen den Zerspanungs- und Führungselementen zu einem Grundkörper als auch bezüglich der Maßhaltigkeit und dessen Herstellung, insbesondere zur kostengünstigen Herstellung bei gleichbleibender hoher Qualität.

Es ist beispielsweise für Fräs- beziehungsweise Schaftfräswerkzeuge bekannt, Rohlinge einzusetzen, welche entlang der Mantelfläche verlaufende nutenförmige Vertiefungen aufweisen, in welche hochharte Schneidstoffe, wie beispielsweise PKD- oder CBN-Werkstoff, eingesintert sind. Derartige Rohlinge werden durch ein funkenerosives Schleifverfahren bearbeitet, um Schaftfräser herzustellen. Hierbei handelt es sich um Mehrschneidenfräser für die Hochleistungszerspanung.

Der Erfindung liegt die Aufgabe zugrunde, Verfahren zur Herstellung von Reibwerkzeugen vorzuschlagen welche kostengünstig herstellbar sind den hohen Qualitätsanforderungen genügen flexibel in der Ausgestaltung und in dessen Aufbau sind und die wirkenden Kräfte sicher aufnehmen.

Diese Aufgabe wird erfindungsgemäß durch die Verfahren gemäß den Merkmalen der Ansprüche 1, 2 und 3 gelöst.

Durch den Einsatz eines Rohlings, welcher an seiner Mantelfläche im wesentlichen geradlinig oder spiralförmig verlaufende nutenförmige Vertiefungen aufweist, in welchen hochharte Schneidstoffe eingesintert sind, kann eine kostengünstige Herstellung und Bearbeitung eines Reibwerkzeuges gegeben sein. Durch die bereits in dem Rohling vorhandenen hochharten Schneidstoffe kann eine aufwendige Vorbereitung zur Einbringung von Aufnahmen für Zerspanungs- und/oder Führungselemente entfallen, da die eingesinterten Hartstoffschichten anwendungsspezifisch als Zerspanungs- und/oder Führungsleiste eingesetzt und auf Maß bearbeitet werden können. Des weiteren ist durch diese vorteilhafte Ausgestaltung ermöglicht, daß der Schaft des Reibwerkzeuges aus einem kostengünstigerem Material hergestellt werden kann, welches mit dem Formkopf formschlüssig, vorzugsweise aber stoffschlüssig, verbindbar ist.

Der Einsatz von Rohlingen mit in nutenförmigen Vertiefungen vorgesehenen hochharten Schneidstoffen, welche an der Mantelfläche umlaufen, erscheint zunächst abwegig. Schaftfräswerkzeuge, bei denen der Einsatz von Rohlingen bekannt ist, werden zur Bearbeitung von Werkstücken in der X-Y Ebene eingesetzt. Dabei weist der Schaftfräser entlang dessen Rotationsachse Umfangschneiden auf, die als Hauptschneide ausgebildet sind und bei der Fräsbearbeitung in Einsatz kommen. Die zu der Stirnseite des Fräswerkzeuges angeordneten Schneiden spielen keine oder nur eine sehr untergeordnete Rolle. Darüber hinaus arbeiten Schaftfräser mit relativ hohen Schnittgeschwindigkeiten und Schnittiefen, wodurch ganz andere Kräfte auf einen Kopf eines Schaftfräsers wirken. Bei Reibwerkzeugen hingegen ist die Bearbeitung und die Zerspanung von völlig anderen Parametern und Dimensionen bestimmt. Bei der Reibbearbeitung wird ausschließlich in Z-Richtung die Bohrung bearbeitet, wo hingegen in X- und Y-Richtung eine Bearbeitung weder vorgesehen noch möglich ist. Darüber hinaus ist zur Stirnseite eines Reibwerkzeuges zumindest eine Hauptschneide angeordnet, wo hingegen längs der Rotationsachse zumindest eine Nebenschneide vorgesehen ist, welche im wesentlichen Führungsaufgaben aufweist. Dadurch erscheint der Einsatz von derartigen Rohlingen mit den sich im wesentlichen koaxial zur Rotationsachse erstreckenden, in Nuten angeordneten hochharten Schneidstoffen nicht geeignet zu sein, insbesondere unter Berücksichtigung der Kosten. Dasselbe gilt für den Einsatz von Reibwerkzeugen aufgrund der von der Frästechnik abweichenden Kräfte, Parameter und Anforderungen, der eine Ausgestaltung des Reibwerkzeuges mittels eines Rohlings, an dessen Mantelfläche im wesentlichen geradlinig oder spiralförmig umlaufende nutenförmige Vertiefungen vorgesehen sind, in welche eine Hartstoffschicht eingesintert ist, zunächst abwegig erscheinen läßt.

Durch die erfindungsgemäße Herstellung eines Reibwerkzeuges kann erzielt werden, daß ein Reibwerkzeug mit gedrallten Zerspanungs- und/oder Führungselementen ausgebildet wird. Dies kann beispielsweise für eine Mehrschneidenreibahle ermöglicht sein, welche aus hochharten Schneidstoffen ausgebildete Schneiden aufweist. Ebenso kann ein Einschneidenreibwerkzeug mit Führungsleisten vorgesehen sein, bei dem sowohl das Zerspanungselement als auch die Führungselemente oder eines von beiden gedrallt sind. Dadurch kann eine erhebliche Verbesserung bezüglich der Bearbeitungsqualität, der Geschwindigkeit als auch der Standzeit des Werkzeuges erzielt werden. Dies beruht auch darauf, daß die Zerspanungs- und Führungselemente in den Grundkörper des Formkopfes eingesintert sind, wodurch eine stoffliche Verbindung höherer Qualität als bei einer herkömmlichen Lötverbindung entstehen kann. Dadurch können des weiteren die arbeitsintensiven Lötverbindungen und die Fertigung von Platten- oder Führungsleistenaufnahmen entfallen, die auch mit der Gefahr von schadhaften Lötstellen behaftet sind, welche beispielsweise durch eine nachlässige Reinigung der Kontaktflächen auftreten können.

Es kann vorgesehen werden, daß die hochharten Schneidstoffe ein PKD-Werkstoff sind. Dieser kann anwendungsspezifisch entsprechend dem zu bearbeitenden Material eingesetzt werden, wie beispielsweise bei der Bearbeitung von Buntmetallen.

Es kann weiterhin vorgesehen werden, daß als hochharte Schneidstoffe ein CBN-Werkstoff eingesetzt wird. Entsprechend den weiteren zu bearbeitenden Materialien kann dieses geeignete Material zum Einsatz kommen.

Es kann weiterhin vorgesehen werden, daß die hochharten Schneidstoffe als Zerspanungs- und/oder Führungselement ausgebildet sind. Dies hat den Vorteil, daß beide Elemente durch den Sintervorgang eine chemische Verbindung zum Grundkörper des Rohlings aufweisen, welche durch den dabei stattfindenden Diffusionsprozeß, bei dem beispielsweise eine Kobaltoder Nickelverbindung entstehen kann, eine wesentlich höhere Festigkeit gegenüber einer Löt- oder Klebverbindung aufweist.

Es kann weiterhin vorgesehen werden, daß die Zerspanungs- und Führungselemente sowohl links- oder rechtsgedrallt ausgebildet sein können. Somit kann je nach Anwendungsfall die entsprechende Ausgestaltung des Reibwerkzeuges ermöglicht werden.

Nach der Erfindung ist vorgesehen, daß durch Schleifbearbeitung Spannuten in den Rohling eingebracht werden können. In Abhängigkeit des jeweiligen Anwendungsfalles kann vorgesehen sein, daß die hochharten Schneidstoffe für eine oder mehrere Schneiden und Führungsleisten oder lediglich für Zerspanungselemente oder Führungselemente auf Maß geschliffen werden. Bei den beiden letzten Alternativen können jeweils entsprechend die Führungselemente oder Schneidelemente durch entsprechende eingesetzte Elemente ergänzt werden.

Es kann weiterhin vorgesehen werden, daß die Länge oder auch nur der vordere Teil des Rohlings durch die Länge der Nebenschneiden beziehungsweise durch die Länge der Führungsleisten bestimmt werden kann. Dabei kann vorgesehen sein, daß ein oder mehrere Rohlinge aneinander gereiht werden, um für die Anwendung entsprechend ausgebildet zu sein, zum Beispiel bei Stufenbohrungen. Durch die erfindungsgemäße Herstellung kann ein Reibwerkzeug ausgebildet sein, welches im wesentlichen durch die Reduzierung der einzelnen Arbeitsschritte bestimmt ist. Durch die Anbringung eines Rohlinges mit in nutenförmigen Vertiefungen vorgesehenen hochharten Schneidstoffen an einem Schaft kann die aufwendige Vorbereitung eines Grundkörpers zur Aufnahme von Zerspanungs- und Führungselementen und deren anschließenden Lötung entfallen. Durch die vorzugsweise Schleifbearbeitung des Rohlings auf Maß kann mittels einer Einspannung eine schnelle Fertigbearbeitung eines Reibwerkzeuges gegeben sein. Gleichzeitig kann durch diese Bearbeitung eine hohe Maßhaltigkeit gegeben sein, da ein mehrfaches Umspannen des Werkzeuges nicht erforderlich ist. Durch die erfindungsgemäßen Verfahren kann somit ein Reibwerkzeug hergestellt werden, bei dem sowohl das zumindest eine Zerspanungselement als auch das zumindest eine Führungselement durch die an dem Rohling angeordneten hochharten Schneidstoffe ausgebildet sind.

Gleichwertige alternative Verfahren zur Herstellung derartiger Reibwerkzeuge sind durch die Ansprüche 1, 2 und 3 gegeben. Dadurch können anwendungsspezifisch entsprechend dem zu bearbeitenden Werkstoff von den am Rohling angeordneten Zerspanungs- oder Führungselementen abweichende Zerspanungsoder Führungselemente eingesetzt werden, um den spezifischen Anforderungen gerecht werden zu können. Des weiteren kann durch eine erfindungsgemäße Alternative ein Reibwerkzeug hergestellt werden, welches als Mehrschneidenwerkzeug ausschließlich aus Schneiden besteht, die aus den an dem Rohling vorgesehenen hochharten Schneidstoffen besteht.

Durch die weiteren abhängigen Ansprüche sind vorteilhafte Ausgestaltungen der Verfahren angegeben.

Ein besonders bevorzugtes Ausführungsbeispiel wird in der nachfolgenden Zeichnung, der Beschreibung und den Patentansprüchen beschrieben. Es zeigen:
- Figur 1: ein Reibwerkzeug,
- Figur 2 a: ein schematischer Querschnitt eines unbearbeiteten Rohlings zur Herstellung eines Reibwerkzeuges,

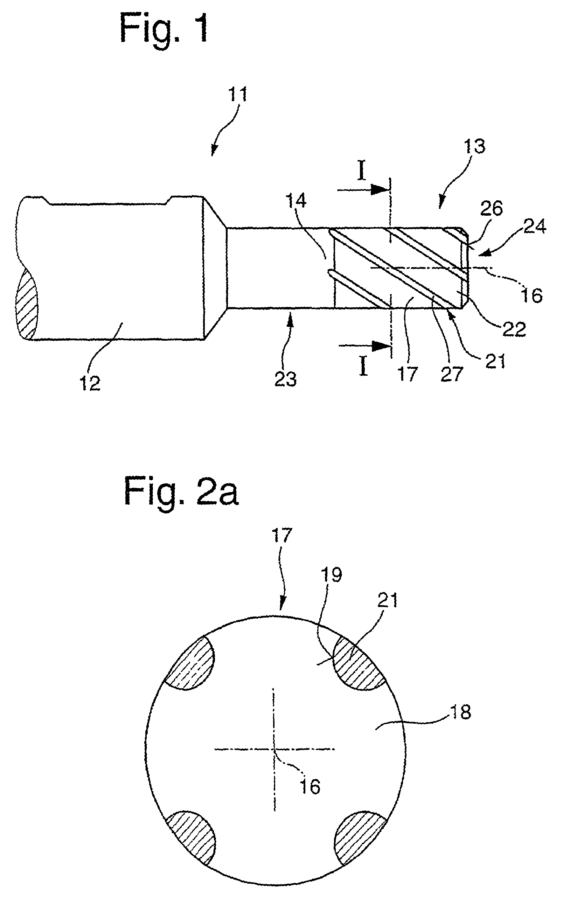

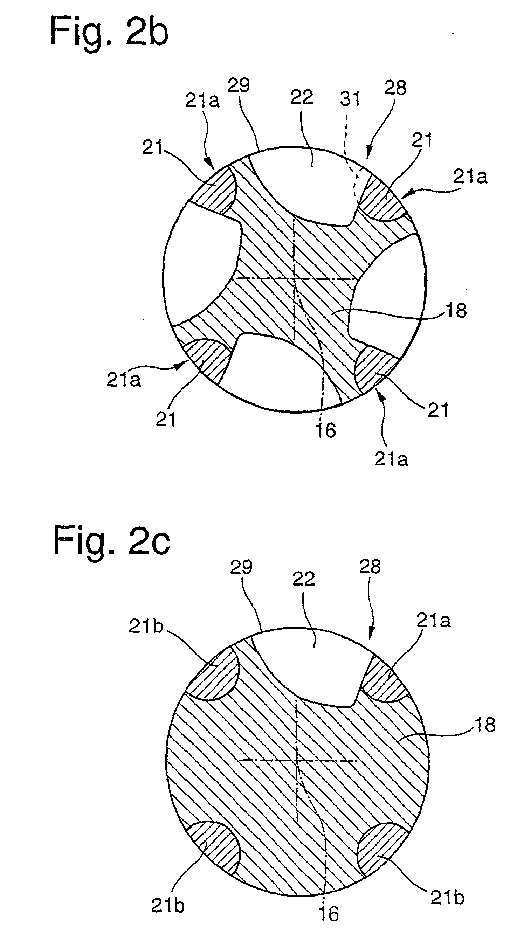

- Figur 2 b: eine schematische Darstellung im Querschnitt eines Mehrschneidenreibwerkzeuges entlang der Linie 1-1 in Figur 1,
- Figur 2 c: eine schematische Schnittdarstellung einer alternativen Ausführungsform entlang der Linie 1-1 in Figur 1,

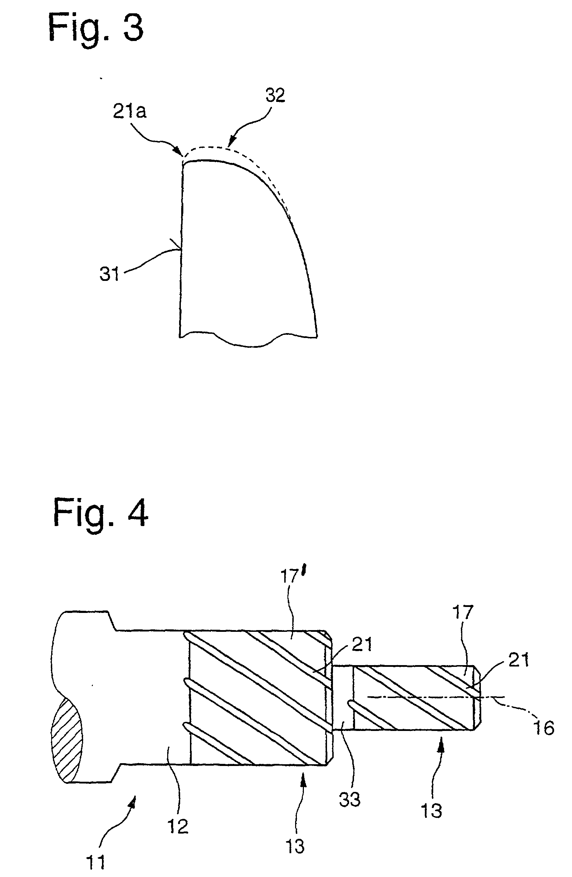

- Figur 3: eine vergrößerte Darstellung einer Schneide und
- Figur 4: eine schematische Darstellung eines mehrstufigen Reibwerkzeuges.

In Figur 1 ist ein Reibwerkzeug 11 dargestellt, welches zur Feinbearbeitung von Bohrungen eingesetzt wird. Das Reibwerkzeug 11 weist einen Schaft 12 auf, welches zur Einspannung an einer Werkzeugmaschine dient. An dem Schaft 12 ist ein Formkopf 13 vorteilhafterweise mittels einer stoffschlüssigen Verbindung zum Schaft 12 angeordnet. Alternativ kann auch eine form- und/oder kraftschlüssige Verbindung vorgesehen sein. Der Formkopf 13 weist vorteilhafterweise eine Zentriemase 14 auf, durch welche der Formkopf 13 rotationssymmetrisch zum Schaft 12 positionierbar ist. Es können weitere geometrische Zentrierungen vorgesehen sein, damit der Formkopf 13 und der Schaft 12 eine gemeinsame Rotationsachse 16 aufweisen.

Der Formkopf 13 ist aus einem Rohling 17 herausgearbeitet. Der Rohling 17 weist einen Querschnitt auf, wie er in Figur 2 a dargestellt ist. In einem Grundkörper 18 des Rohlings 17 sind nutenförmige Vertiefungen19 vorgesehen, in die hochharte Schneidstoffe 21 eingesintert sind. Im Ausführungbeispiel gemäß Figur 2 a ist die nutenförmige Vertiefung 19 halbkreisförmig ausgebildet. Anwendungsspezifisch kann diese rechteckförmig, V-förmig oder weitere Geometrien aufweisen. Der Grundkörper 18 ist vorteilhafterweise aus Hartmetall ausgebildet. Weitere Materialien können ebenso eingesetzt werden, die geeignet sind, durch einen Diffusionsprozeß während des Sintervorganges eine stoffliche Verbindung mit den hochharten Schneidstoffen einzugehen. Als hochharter Schneidstoff ist insbesondere ein PKD-oder CBN-Werkstoff vorgesehen. Die hochharten Schneidstoffe 21 können untereinander unterschiedlich als Zerspanungs- und Führungselemente ausgebildet sein.

Gemäß Figur 1 ist das Reibwerkzeug als Mehrschneidenreibwerkzeug ausgebildet, dessen Querschnitt beispielsweise in Figur 2 b dargestellt ist. Die hochharten Schneidstoffe 21 beziehungsweise Hartstoffinlays sind als Zerspanungselement ausgebildet. Diesem vorauseilend sind Spannuten 22 eingearbeitet, welche sich axial zum Nutenauslaufbereich 23 erstrecken.

Der Formkopf 13 weist an seiner Stirnseite 24 Hauptschneiden 26 auf, die in Nebenschneiden 27 übergehen. Die Nebenschneiden 27 haben hauptsächlich Führungsaufgaben.

In Figur 2 b sind beispielsweise vier Zerspanungselemente 21 a dargestellt. Die Anzahl der Zerspanungselemente bestimmt sich nach der in den Grundkörper 18 des Rohlings 17 eingesinterten Anzahl an Hartstoffinlays 21. Diese Anzahl kann anwendungsspezifisch höher oder niedriger sein. Des weiteren kann sowohl eine symmetrisch über den Umfang verteilte Ausgestaltung der Haupt- und Nebenschneiden 26, 27 als auch eine asymmetrische Ausgestaltung vorgesehen sein, bei der die Teilung unterschiedliche Winkel aufweist. Die äußere Schnittkante 28 liegt auf einem Flugkreisdurchmesser 29, der dem Außendurchmesser des Rohlings 17 entspricht oder kleiner sein kann. Die Form der Spannuten 22 wird anwendungsspezifisch eingearbeitet.

In Figur 2 c ist eine weitere alternative Ausführungsform eines Reibwerkzeuges 11 dargestellt. Beispielsweise weist dieser Rohling 17 vier Hartstoffinlays oder Hartstoffsegmente 21 auf, wobei ein Einschneidenreibwerkzeug ausgebildet ist, welches eine Schneide 21 a als Zerspanungselement und drei Führungsleisten 21 b als Führungselemente aufweist. Alternativ kann auch vorgesehen sein, daß die Schneide 21 a und Führungsleiste 21 b abwechselnd zueinander vorgesehen sind. Auch die Teilung der hochharten Schneidstoffe 21 kann in diesem Ausführungsbeispiel symmetrisch oder unsymmetrisch sein. Ebenso kann die Anzahl der hochharten Schneidstoffe 21 variiert werden. Des weiteren kann auch die Größe und Form der nutenförmigen Vertiefungen 19 als auch der Drallwinkel anwendungsspezifisch ausgewählt und festgelegt werden.

Ein Verfahren zur Herstellung eines Reibwerkzeuges 11 wird anhand der Figur 2 c in Verbindung mit Figur 3, welches eine Detaildarstellung einer Schneide 21 a darstellt, erörtert:

Zunächst wird der Schaft 12 durch Schleifbearbeitung in seine Form gebracht. An seinem freien Ende zur Aufnahme des Rohlinges 17 wird eine Zentrierhilfe eingebracht. An einer zum Schaft 12 weisenden Stirnseite des Rohlings 17 wird ebenfalls eine Zentrierhilfe eingearbeitet, so daß der Rohling 17 und der Schaft 12 stoffschlüssig miteinander verbunden werden können und eine gemeinsame Rotationsachse 16 aufweisen. Es ist auch eine kraft- und/oder formschlüssige Verbindung möglich. Der Rohling 17 kann als Ganzes an dem Schaft 12 angeordnet sein. Alternativ kann auch vorgesehen sein, daß der Rohling 17 als Stangenmaterial bereitgestellt wird, welches entsprechend der erforderlichen Länge des zu fertigenden Reibwerkzeuges zugeschnitten wird. Somit können beispielsweise aus einem stangenförmigen Rohling 17 mehrere Scheiben abgetrennt und eine dieser Scheiben an dem Schaft 12 angebracht werden. Anschließend wird ein Außendurchmesser des Rohlings 17 auf das exakte Maß des Flugkreisdurchmessers 29 der Schneide 21 a geschliffen. Der Schneide 21 a vorauseilend - in Rotationsrichtung gesehen - wird eine Spannut 22 mit einer Schleifscheibe eingestochen. Diese kann vorteilhafterweise entsprechend der zu fertigenden Spannut 22 profiliert sein, so daß in einem Arbeitsgang die Spannut 22 ausgebildet werden kann. Die Schleifscheibe wird dann in Richtung der Hartstoffschicht 21 zubewegt, so daß die Bearbeitung der Spanfläche 31 erfolgt. Dadurch kann eine nahezu scharfe Schneide 21 a ausgebildet werden. Diese Bearbeitungsreihenfolge hat den Vorteil, daß kein Härtesprung erfolgt, der gegeben wäre, wenn die Schleifscheibe frei auf die Hartstoffschicht auftreffen würde. Dadurch können die Stoßbelastungen der Schleifscheibe bei Eintritt in den hochharten Schneidstoff wesentlich verringert werden.

Durch diese vorteilhafte Bearbeitungsreihenfolge kann erzielt werden, daß keine sogenannte hängende Nase 32 als Schneide erzielt wird, sondern eine nahezu scharfkantige Schneide 21 a ausgebildet sein kann.

Anschließend kann mittels einer geeigneten Steuerung die Geometrie der Führungsleisten 21 b und die Geometrie der Freifläche der Schneide 21 a eingebracht werden. Dabei wird an dem Grundkörper 18 mehr Material abgetragen als an dem äußersten Punkt der Führungsleisten 21 b und Schneide 21 a.

Durch diese erfindungsgemäße Fertigungstechnologie sind neue Spangeometrien gegenüber den bisher bekannten Reibwerkzeugen mit PKD bestückten Schneiden und Führungsleisten ermöglicht. Insbesondere weisen diese Reibwerkzeuge den Vorteil auf, daß gedrallte Schneiden und Führungsleisten vorgesehen sind, wodurch die Bearbeitungsparameter und die Oberflächenqualität erhöht werden können. Der Vorteil gegenüber geradlinig ausgebildeten Schneiden und Führungsleisten, die unter einem bestimmten Winkel zur Längsachse am Umfang des Formkopfes eingesetzt wurden, liegt darin, daß durch ein Nachschleifen der Werkzeuge aufgrund der Abnutzung die Schneide und der Führungspunkt der Führungsleisten an ihrer vorgesehenen Stelle der Achsen im Stirnschnitt verbleiben. Dadurch kann beispielsweise bei der Schneide ein Spanwinkel auf 1° genau eingehalten werden. Bei geradlinig ausgebildeten Schneiden, die unter einem bestimmten Winkel angeordnet sind, würde hingegen die Mitte der Schneide nach dem Nachschleifen vor oder hinter der Mitte, in Rotationsrichtung gesehen, liegen. Dies hätte zur Folge, daß der Spanwinkel größer oder kleiner werden würde. Vor allem bei Reibwerkzeugen mit kleinerem Durchmesser hat dies einen negativen Einfluß auf die Bearbeitungsqualität und das Einsatzverhalten. Durch die vorteilhafte Ausgestaltung des Reibwerkzeuges kann jedoch dieser Nachteil ausgeschlossen werden.

Alternativ zu dem Einstechen der Schleifscheibe in den Grundkörper 18 kann die Herstellung der Spanraumgeometrie durch andere Verfahren, wie zum Beispiel Erodieren und einem anschließenden Fertigschleifen vorgesehen sein.

Für die Herstellung einer Mehrschneidenreibahle gemäß Figur 2 b kann die nutenförmige Vertiefung 19 eine entsprechend an den Verlauf der Spanfläche 31 angepaßte Geometrie aufweisen. Dies weist den Vorteil auf, daß der Verschleiß der Schleifscheibe um ein erhebliches Maß verringert werden kann. Beispielsweise kann dies durch eine in Figur 2 b dargestellten Geometrie erzielt werden, bei der das strichlinierte Kreissegment 31 nicht ausgebildet ist.

Alternativ zu den anhand der Figuren 2 b und 2 c beschriebenen Verfahren zur Herstellung derartiger Reibwerkzeuge 11 kann vorgesehen sein, daß zur Aufnahme von Zerspanungs- oder Führungselementen Nuten in den Grundkörper 18 eingearbeitet werden, in welche die Zerspanungs- oder Führungselemente eingesetzt werden können. Beispielsweise kann vorgesehen sein, daß kassettenförmige Aufnahmen in den Grundkörper 18 eingebracht werden, um die Schneiden oder Führungselemente auswechselbar aufzunehmen.

In Figur 4 ist ein mehrstufiges Reibwerkzeug 11 dargestellt, welches zur Bearbeitung einer zweistufigen Bohrung vorgesehen ist. Bei diesem Reibwerkzeug 11 ist beispielsweise ein Rohling 17 mit einem kleineren Durchmesser an einem zylindrischen Schaftteil 33 angeordnet, welches wiederum an einem Rohling 17' mit einem größeren Durchmesser angreift, der wiederum zum Schaft 12 befestigt ist. Die Anzahl der Stufen zur Ausbildung eines Reibwerkzeuges 11 ist beliebig, ebenso die Durchmesserabstufung als auch die Länge der Rohlinge 17, 17'. Es kann auch vorgesehen sein, daß die Rohlinge 17,17' unmittelbar aneinander angrenzend angeordnet sind. Des weiteren ist vorstellbar, daß ein Reibwerkzeug 11 ausgebildet ist, welches einen Rohling 17, 17' mit einem kegelförmigen Abschnitt aufweist. Dieser kann ebenso in Kombination mit zylindrischen Rohlingen 17, 17' zu einem Reibwerkzeug 11 ausgebildet sein. Die Anzahl und Ausgestaltung von kegelförmigen Rohlingen 17, 17' und zylindrisehen Rohlingen 17, 17' in bezug auf die Länge und Größe als auch deren Variation kann an den jeweiligen Anwendungsfall angepaßt werden. Des weiteren kann vorgesehen sein, daß für die Bearbeitung sowohl ein Werkzeug mit Rechtsdrall oder Linksdrall oder ohne Drall vorgesehen sein kann. Der Drallwinkel ist frei wählbar und bestimmt sich nach dem Anwendungsfall.

## Patentansprüche

1. Verfahren zur Herstellung eines Reibwerkzeuges (11) mit einem Schaft (12) und einem Formkopf (13), bei dem der Formkopf (13) aus einem Rohling (17) hergestellt wird, der einen Grundkörper (18) aus einem Grundwerkstoff aufweist, an dessen Mantelfläche zumindest eine im wesentlichen geradlinig oder spiralförmig umlaufende nutenförmige Vertiefung (19) vorgesehen ist, in welche hochharte Schneidstoffe (21) eingesintert sind, bei dem der Schaft (12) mit dem Rohling (17) verbunden wird und bei dem zumindest eine Schneide (21a) aus hochhartem Schneidstoff (21) hergestellt wird, dadurch gekennzeichnet,
a)- daß der Durchmesser (29) des Rohlings (17) auf das exakte Maß des Flugkreisdurchmessers der zumindest einen Schneide (21a) gebracht wird,
b) - daß mit einer Schleifscheibe zumindest eine Spannut (22) in Rotationsrichtung vorauseilend an der zumindest einen Schneide (21a) eingebracht wird,
c) - daß die Schleifscheibe auf die die Schneidstoffe aufnehmende Vertiefung (19) zubewegt wird und
d)- daß die Spanfläche der zumindest einen Schneide (21a) auf Maß gebracht wird.

2. Verfahren zur Herstellung eines Reibwerkzeuges (11) mit einem Schaft (12) und einem Formkopf (13), bei dem der Formkopf (13) aus einem Rohling (17) hergestellt wird, der einen Grundkörper (18) aus einem Grundwerkstoff aufweist, an dessen Mantelfläche zumindest eine im wesentlichen geradlinig oder spiralförmig umlaufende nutenförmige Vertiefung (19) vorgesehen ist, in welche hochharte Schneidstoffe (21) eingesintert sind, bei dem der Schaft (12) mit dem Rohling (17) verbunden wird und bei dem zumindest eine Schneide (21a) und zumindest eine Führungsleiste (21b) aus hochhartem Schneidstoff (21) hergestellt wird, dadurch gekennzeichnet,
a) - daß der Außendurchmesser (29) auf das exakte Maß des Flugkreisdurchmessers der zumindest einen Schneide (21a) und der zumindest einen Führungsleiste (21b) gebracht wird,
b) - daß mit einer Schleifscheibe zumindest eine Spannut (22) in Rotationsrichtung vorauseilend an der zumindest einen Schneide (21a) eingebracht wird,
c) - daß die Schleifscheibe auf die die Schneidstoffe (21) aufnehmende Vertiefung (19) zubewegt wird,
d) - daß die Spanfläche der zumindest einen Schneide (21a) auf Maß gebracht wird und
e) - daß die Geometrie der zumindest einen Führungsleiste (21b) eingebracht wird, wobei an dem Grundkörper (18) mehr Material als an dem äußersten Punkt der zumindest einen Führungsleiste (21b) abgetragen wird.

3. Verfahren zur Herstellung eines Reibwerkzeuges (11) mit einem Schaft (12) und einem Formkopf (13), bei dem der Formkopf (13) aus einem Rohling (17) hergestellt wird, der einen Grundkörper (18) aus einem Grundwerkstoff aufweist, an dessen Mantelfläche zumindest eine im wesentlichen geradlinig oder spiralförmig umlaufende nutenförmige Vertiefung (19) vorgesehen ist, in welche hochharte Schneidstoffe (21) eingesintert sind, bei dem der Schaft (12) mit einem Rohling (17) verbunden wird und bei dem zumindest eine Schneide (21a) eingesetzt und zumindest eine Führungsleiste (21b) aus hochhartem Schneidstoff hergestellt wird, dadurch gekennzeichnet,
a)- daß der Außendurchmesser (29) auf das exakte Maß des Flugkreisdurchmessers der zumindest einen Führungsleiste (21b) gebracht wird,
b) - daß zumindest eine Spannut (22) eingebracht wird,
c) - daß zumindest eine Aufnahme für eine Schneide (21a) einbracht wird und
d) - daß die Geometrie der zumindest einen Führungsleiste (21b) eingebracht wird, wobei an dem Grundkörper (18) mehr Material als an dem äußersten Punkt der zumindest einen Führungsleiste (21b) abgetragen wird.

4. Verfahren nach Anspruch 1, dadurch gekennzeichnet, daß mit einer Schleifscheibe zumindest eine Ausnehmung zur Aufnahme einer Führungsleiste (21b) eingebracht wird.

5. Verfahren nach einem der Ansprüche 1 bis 4, dadurch gekennzeichnet, daß vor der Bearbeitung des Rohlings (17) an einer zum Schaft (12) weisenden Stirnfläche eine Zentrierhilfe eingearbeitet wird.

6. Verfahren nach einem der Ansprüche 1 bis 5, dadurch gekennzeichnet, daß die Schneide (21 a) und/oder Führungsleiste (21 b) bahngesteuert auf Maß gebracht wird.

7. Verfahren nach einem der Ansprüche 1 bis 6, dadurch gekennzeichnet, daß eine profilierte Schleifscheibe zur Herstellung der Spannuten (22) eingesetzt wird.

## Claims

1. Method of producing a reaming tool (11) having a shank (12) and a forming head (13), in which the forming head (13) is produced from a blank (17) which has a parent body (18) made of a parent material, on the lateral surface of which at least one essentially rectilinearly or spirally encircling groove-shaped recess (19), in which superhard cutting materials (21) are sintered in place, is provided, and in which reaming tool. (11) the shank (12) is connected to the blank (17) and in which at least one blade (21a) of superhard cutting material (21) is produced, characterized in that
a)- the diameter (29) of the blank (17) is finished to the exact size of the pitch circle diameter of the at least one blade (21a),
b)- at least one flute (22) is made with a grinding wheel at the at least one blade (21a) in such a way as to be in advance of the latter in the direction of rotation,
c) - the grinding wheel is moved towards the recess (19) accommodating the cutting materials, and
d)- the rake face of the at least one blade (21a) is finished to size.

2. Method of producing a reaming tool (11) having a shank (12) and a forming head (13), in which the forming head (13) is produced from a blank (17) which has a parent body (18) made of a parent material, on the lateral surface of which at least one essentially rectilinearly or spirally encircling groove-shaped recess (19), in which superhard cutting materials (21) are sintered in place, is provided, and in which reaming tool (11) the shank (12) is connected to the blank (17) and in which at least one blade (21a) and at least one guide strip (21b) of superhard cutting material (21) is produced, characterized in that
a)- the outside diameter (29) is finished to the exact size of the pitch circle diameter of the at least one blade (21a) and the at least one guide strip (21b),
b)- at least one flute (22) is made with a grinding wheel at the at least one blade (21a) in such a way as to be in advance of the latter in the direction of rotation,
c)- the grinding wheel is moved towards the recess (19) accommodating the cutting materials (21),
d)- the rake face of the at least one blade (21a) is finished to size, and
e)- the geometry of the at least one guide strip (21b) is produced, in the course of which more material is removed at the parent body (18) than at the outermost point of the at least one guide strip (21b).

3. Method of producing a reaming tool (11) having a shank (12) and a forming head (13), in which the forming head (13) is produced from a blank (17) which has a parent body (18) made of a parent material, on the lateral surface of which at least one essentially rectilinearly or spirally encircling groove-shaped recess (19), in which superhard cutting materials (21) are sintered in place, is provided, and in which reaming tool (11) the shank (12) is connected to a blank (17) and in which at least one blade (21a) is inserted and at least one guide strip (21b) of superhard cutting material is produced, characterized in that
a)- the outside diameter (29) is finished to the exact size of the pitch circle diameter of the at least one guide strip (21b),
b)- at least one flute (22) is made,
c)- at least one receptacle for a blade (21a) is made, and
d) - the geometry of the at least one guide strip (21b) is produced, in the course of which more material is removed at the parent body (18) than at the outermost point of the at least one guide strip (21b) .

4. Method according to Claim 1, characterized in that at least one recess for accommodating a guide strip (21b) is made with a grinding wheel.

5. Method according to one of Claims 1 to 4, characterized in that, before the blank (17) is machined, a centring aid is made on an end face pointing towards the shank (12).

6. Method according to one of Claims 1 to 5, characterized in that the blade (21a) and/or guide strip (21b) is finished to size in a path-controlled manner.

7. Method according to one of Claims 1 to 6, characterized in that a profiled grinding wheel is used for producing the flutes (22).

## Revendications

1. Procédé pour la fabrication d'un outil d'alésage (11) comprenant un arbre (12) et une tête de façonnage (13), dans lequel la tête de façonnage (13) est fabriquée à partir d'une ébauche (17), qui présente un corps de base (18) en un matériau de base à la surface latérale duquel au moins un renfoncement (19) en forme de rainure périphérique est prévu essentiellement en ligne droite ou en spirale, dans lequel des matières de coupe de grande dureté (21) sont frittées, dans lequel procédé l'arbre (12) est connecté à l'ébauche (17) et dans lequel au moins une arête (21a) est fabriquée en matière de coupe de grande dureté (21), caractérisé en ce que :
a) - le diamètre (29) de l'ébauche (17) est amené à la dimension exacte du diamètre de l'orbite de l'au moins une arête (21a),
b) - au moins une rainure de coupe (22) est prévue avec un disque de meulage en avant dans le sens de rotation, sur l'au moins une arête (21a),
c) - le disque de meulage est avancé sur le renfoncement (19) recevant les matières de coupe et
d) - la face de coupe de l'au moins une arête (21a) est mise aux dimensions.

2. Procédé de fabrication d'un outil d'alésage (11) comprenant un arbre (12) et une tête de façonnage (13), dans lequel la tête de façonnage (13) est fabriquée à partir d'une ébauche (17) , qui présente un corps de base (18) en un matériau de base à la surface latérale duquel au moins un renfoncement (19) en forme de rainure périphérique est prévu essentiellement en ligne droite ou en spirale, dans lequel des matières de coupe de grande dureté (21) sont frittées, dans lequel procédé l'arbre (12) est connecté à l'ébauche (17) et dans lequel au moins une arête (21a) et au moins une barre de guidage (21b) sont fabriquées en matière de coupe de grande dureté (21),
caractérisé en ce que :
a) - le diamètre extérieur (29) est mis à la dimension exacte du diamètre de l'orbite de l'au moins une arête (21a) et de l'au moins une barre de guidage (21b),
b) - au moins une rainure de coupe (22) est prévue avec un disque de meulage en avant dans le sens de rotation, sur l'au moins une arête (21a),
c) - le disque de meulage est avancé sur le renfoncement (19) recevant les matières de coupe (21),
d) - la face de coupe de l'au moins une arête (21a) est mise aux dimensions et
e) - la géométrie de l'au moins une barre de guidage (21b) est réalisée, davantage de matériau sur le corps de base (18) que sur le point le plus extérieur de l'au moins une barre de guidage (21b) étant enlevé.

3. Procédé de fabrication d'un outil d'alésage (11) comprenant un arbre (12) et une tête de façonnage (13), dans lequel la tête de façonnage (13) est fabriquée à partir d'une ébauche (17) , qui présente un corps de base (18) en un matériau de base à la surface latérale duquel au moins un renfoncement (19) en forme de rainure périphérique est prévu essentiellement en ligne droite ou en spirale, dans lequel des matières de coupe de grande dureté (21) sont frittées, dans lequel procédé l'arbre (12) est connecté à une ébauche (17) et dans lequel au moins une arête (21a) est réalisée et au moins une barre de guidage (21b) est fabriquée en matière de coupe de grande dureté, caractérisé en ce que :
a) - le diamètre extérieur (29) est mis à la dimension exacte du diamètre de l'orbite de l'au moins une barre de guidage (21b),
b) - au moins une rainure de coupe (22) est prévue,
c) - au moins un logement pour une arête (21a) est prévu et
d) - la géométrie de l'au moins une barre de guidage (21b) est réalisée, davantage de matériau sur le corps de base (18) que sur le point le plus extérieur de l'au moins une barre de guidage (21b) étant enlevé.

4. Procédé selon la revendication 1, caractérisé en ce qu'au moins un logement pour la réception d'une barre de guidage (21b) est réalisé avec un disque de meulage.

5. Procédé selon l'une quelconque des revendications 1 à 4, caractérisé en ce qu'avant l'usinage de l'ébauche (17) sur une face frontale tournée vers l'arbre (12), un auxiliaire de centrage est façonné.

6. Procédé selon l'une quelconque des revendications 1 à 5, caractérisé en ce que l'arête (21a) et/ou la barre de guidage (21b) sont amenées aux dimensions par commande continue.

7. Procédé selon l'une quelconque des revendications 1 à 6, caractérisé en ce qu'un disque de meulage profilé est utilisé pour la fabrication des rainures de coupe (22).
